# EUROPEAN PATENT SPECIFICATION

(11) **EP 1 961 243 B1**
(45) Date of publication and mention of the grant of the patent: **28.07.2010**
(21) Application number: 06790060.5
(22) Date of filing: 25.08.2006
(51) Int. Cl.: H04W 4/06

(54) **A METHOD AND APPARATUS FOR RECEIVING SELECTED BROADCAST PROGRAMS AT A MOBILE STATION**
VERFAHREN UND VORRICHTUNG ZUM EMPFANGEN AUSGEWÄHLTER RUNDFUNKPROGRAMME IN EINER MOBILSTATION
PROCEDE ET DISPOSITIF DE RECEPTION A UNE STATION MOBILE DE PROGRAMMES DE DIFFUSION SPECIFIQUES

(30) Priority: 07.12.2005 US 296559
(43) Date of publication of application: 27.08.2008
(73) Proprietor: Sony Ericsson Mobile Communications AB, 221 88 Lund (SE)
(72) Inventor: DUNKO, Gregory, Cary, North Carolina 27511 (US)
(74) Representative: HOFFMANN EITLE
(86) International application number: PCT/US2006/033624
(87) International publication number: WO 2007/067233

(56) References cited:
- US-A1- 2003 134 622
- US-A1- 2004 132 402
- US-A1- 2005 068 963

## Description

### Background

This invention relates generally to multi-media broadcasts, and more particularly to multimedia broadcasts received by mobile stations.

Wireless technology continues to evolve to provide mobile stations with more features. For example, the European Telecommunications Standards Institute (ETSI) recently created a broadcasting standard for mobile stations by modifying the Digital Video Broadcasting (DVB) standard for digital terrestrial television. The resulting DVB-H (DVB transmission system for Handheld terminals) standard, released in 2004, defines the transmission parameters required to broadcast selected program content to a mobile station over a broadcast channel assigned by the wireless network.

As long as the mobile station remains in its home network, the mobile station can receive selected program content on an assigned broadcast channel. However, once the mobile station roams out of the home network and into a visited network, the mobile station will be unable to receive the selected program content on the broadcast channel assigned to the home network if the visited network broadcasts the selected program content on a different broadcast channel. As a result, to continue receiving the selected program content, the user must tune the mobile station to the broadcast channel broadcasting the selected content in the visited network. This can be problematic if the user does not know the identity of the desired broadcast channel or cannot find the desired broadcast channel. Further, the hassle associated with changing the channel on the mobile station every time the mobile station enters a different network may discourage the user from using the broadcast feature, which reduces revenues for wireless service providers.

US 2003/134622 A1 discloses a method for receiving program content at the mobile station on a first broadcast channel while the mobile station is located in its home network, and receiving the same program content on a second broadcast channel when the mobile station roams into a visited network. In order to ease the program reception for the user of the mobile station, the second broadcast channel is automatically mapped to the first broadcast channel based on channel identifiers. The broadcast channel information is transmitted in an overhead control channel. The relationship between the broadcast channels in different networks is explicitly signalled to the mobile station by the network, thereby wasting radio resources.

### Summary

The present invention describes a method and apparatus for receiving selected program content at a mobile station roaming in and out of a home network. While in the home network, the mobile station receives selected broadcast content via a first broadcast channel. However, when the mobile station roams to a visited network, the mobile station will be unable to receive the selected content on the first broadcast channel if the visited network uses a different broadcast channel to broadcast the selected content. To address this issue, a mobile station according to the present invention maps the first broadcast channel to a second broadcast channel broadcasting the selected content in the visited network when the mobile station enters the visited network. As a result, while the mobile station physically receives the selected content on the second broadcast channel as long as the mobile stations remains in the visited network, the user may select the desired content by selecting the first broadcast channel. Therefore, the mapping performed by the present invention is transparent to the user.

The present invention includes methods of receiving selected program content at a mobile station roaming outside of a home network. One exemplary method comprises receiving channel identifiers via one or more broadcast channels broadcasting program content in a visited network, receiving the selected program content at the mobile station on a first broadcast channel while the mobile station is located in the home network, when the mobile station roams into the visited network, mapping the first broadcast channel to a second broadcast channel broadcasting the selected program content in the visited network based on the received channel identifiers, and receiving the selected program content at the mobile station on the second broadcast channel while the mobile station is located in the visited network.

In one exemplary method, mapping the first broadcast channel to the second broadcast channel comprises correlating a first channel indicator assigned to the first broadcast channel to the second broadcast channel.

In one exemplary method, the first channel indicator is assigned to the first broadcast channel by the home network.

In one exemplary method, the first channel indicator comprises a user-selected channel indicator that correlates to a network-assigned channel indicator associated with the first broadcast channel.

In one exemplary method, mapping the first broadcast channel to the second broadcast channel comprises mapping the first broadcast channel to the second broadcast channel based on the received channel identifiers.

The exemplary methods may further comprise assigning new program content to a new channel indicator when the mobile station roams into the visited network, wherein the new program content is unavailable in the home network.

The exemplary methods may further comprise storing mapping information associated with mapping the first broadcast channel to the second broadcast channel for future use.

Embodiments of the invention may further comprise a mobile station. The mobile station according to one embodiment may comprise a transceiver configured to receive channel identifiers via one or more broadcast channels broadcasting program content in a visited network, selected program content on a first broadcast channel while the mobile station is located in a home network, the selected program content on a second broadcast channel while the mobile station is located in the visited network; and a processor configured to map the first broadcast channel to the second broadcast channel based on the received channel identifiers when the mobile station roams into the visited network.

In one exemplary mobile station, the processor maps the first broadcast channel to the second broadcast channel by correlating a first channel indicator assigned to the first broadcast channel to the second broadcast channel.

In one exemplary mobile station, the first channel indicator is assigned to the first broadcast channel by the home network.

In one exemplary mobile station, the first channel indicator comprises a user-selected channel indicator that correlates to a network-assigned channel indicator associated with the first broadcast channel.

In one exemplary mobile station, the processor is further configured to assign new program content to a new channel indicator when the mobile station roams into the visited network, wherein the new program content is unavailable in the home network.

In one exemplary mobile station, the transceiver comprises a digital video broadcast receiver.

The exemplary mobile station may further comprise a memory configured to store mapping information associated with mapping the first broadcast channel to the second broadcast channel for future use.

### Brief Description of the Drawings

Figure 1 illustrates a mobile station according to one exemplary embodiment of the present invention.
Figure 2 illustrates exemplary multi-media broadcast networks.
Figure 3 illustrates a method according to one exemplary embodiment of the present invention.
Figure 4 illustrates additional details for an exemplary mapping method.
Figure 5 Illustrates additional details for another exemplary mapping method.

### Detailed Description

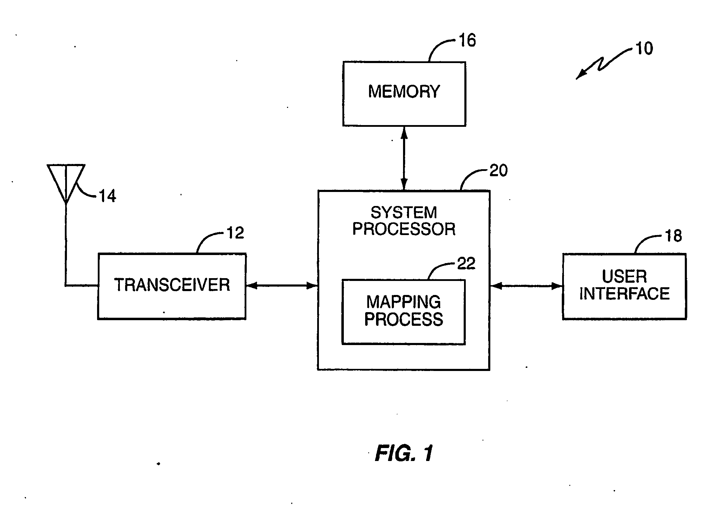

The present invention relates to a mobile station that receives multi-media programs over a broadcast channel. As used herein, the term mobile station means any portable device used for wireless communications and includes, without limitation, cellular telephones, personal data assistants, paimtop and laptop computers, and any other devices having a radio telephone. While mobile station operation is well understood by those skilled in the art, the following briefly describes the exemplary mobile station 10 illustrated by Figure 1 to facilitate the subsequent discussions.

Mobile station 10 includes a transceiver 12, antenna 14, memory 16, user interface 18, and system processor 20. Transceiver 12 comprises a fully functional wireless transceiver that receives and transmits wireless signals via antenna 14 according to any known wireless communication standard, such as GSM (Global System for Mobile communications), CDMA (Code Division Multiple Access), etc. System processor 20 controls the operation of mobile station 10 responsive to programs stored in memory 16 and instructions provided by a user via user interface 18. System processor 20 may comprise one or more microprocessors, microcomputers, digital signal processors, special purpose hardware circuit, firmware, software, or a combination thereof. It will be appreciated that system processor 20 and/or memory 16 may be implemented in an application-specific integrated circuit (ASIC).

A wireless network broadcasts different program content over different broadcast channels to mobile stations 10 within the network When a user selects a particular broadcast channel, e.g., by entering a channel number using user interface 18, system processor 20 configures transceiver 12 to receive the corresponding program content via the selected broadcast channel. As such, a user may select desired program content by selecting the broadcast channel that broadcasts the desired program content.

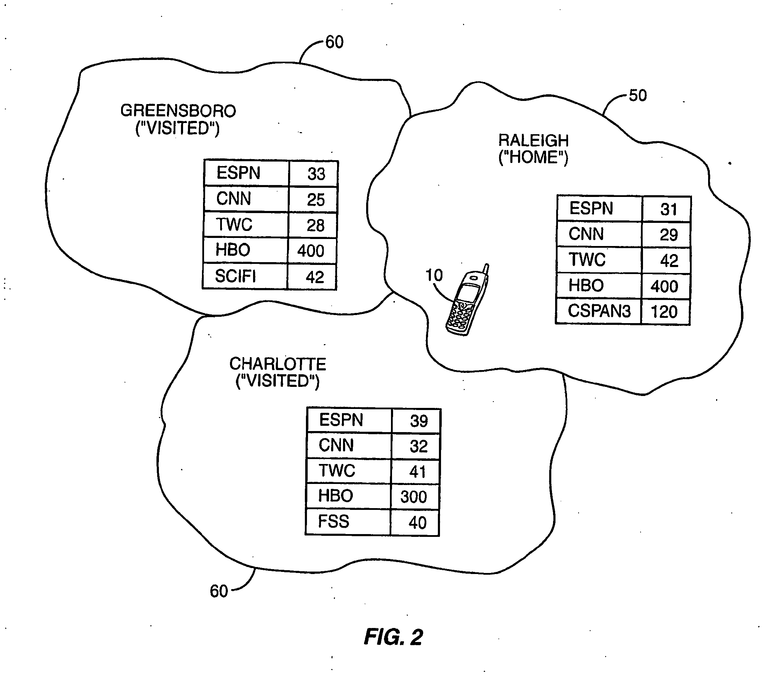

Figure 2 illustrates an exemplary home network 50 for mobile station 10, and two exemplary visited networks 60 that may service mobile station 10 when mobile station 10 roams outside of home network 50. Figure 2 also illustrates some broadcast channels available to each network 50, 60. Those skilled in the art will appreciate that the present invention is not limited to the specific details illustrated by Figure 2.

Each network 50, 60 broadcasts program content on assigned broadcast channels as well understood by those skilled in the art. The networks 50, 60 assign specific broadcast channel information, such as a channel indicator or number, transmission frequency, modulation parameters, channel content identification, etc., to each broadcast channel. Mobile station 10 stores the broadcast channel information associated with the mobile station's home network 50 in memory 16. For the home network 50 illustrated in Figure 2, mobile station 10 stores channel indicators 29, 31, 42, 120, and 400, as well as other broadcast channel information, for the broadcast channels corresponding to CNN, ESPN, The Weather Channel (TWC), CSPAN 3, and HBO, respectively. As long as mobile station 10 operates within home network 50, a user may select a broadcast channel by entering one of the channel indicators using user interface 18. Responsive to this user input, system processor 20 configures transceiver 12 to receive the program content broadcast by the selected broadcast channel. While the following discusses the channel indicators in terms of the network-specified channel indicators, those skilled in the art will appreciate that the channel indicators may also comprise preset values selected by the user, where each user selected preset value corresponds to a network-assigned channel indicator and/or broadcast channel. For example, a user could assign preset channels 1, 2, 3, 4, and 5 to the network-specified channels 31, 29, 42, 400, and 120, respectively.

As shown in Figure 2, home network 50 and visited network 60 may use the same broadcast channel to broadcast common program content. For example, the Greensboro and Raleigh networks 50, 60 both use channel 400 to broadcast HBO program content. However; a visited network 60 may assign common program content to different broadcast channels than those used by home network 50. These different channel assignments may cause undesirable program interruptions when a mobile station 10 roams out of its home network 50 because, for example, a user may be unable to find the selected content in the visited network 60. For example, because channel 42 is assigned to the Sci Fi channel in the Greensboro visited network 60, a mobile station 10 tuned to channel 42 that roams into the Greensboro visited network 60 will receive Sci Fi program content instead of the TWC program content associated with channel 42 in the home network 50.

To address these problems, a mobile station 10 according to the present invention includes a mapping processor 22. Like system processor 20, mapping processor 22 may comprise one or more microprocessors, microcomputers, digital signal processors, special purpose hardware circuits, firmware, software, or a combination thereof. While Figure 1 illustrates mapping processor 22 as part of system processor 20, those skilled in the art will appreciate that mapping processor 22 may alternatively be implemented independently from system processor 20.

When mobile station 10 roams into a visited network 60, mapping processor 22 maps a home broadcast channel to a visited broadcast channel, where the visited broadcast channel broadcasts the same program content as the home broadcast channel. For example, while the mobile station 10 is in the home network 50, the user selects desired program content, i.e., ESPN, by selecting the home broadcast channel assigned to ESPN, i.e., broadcast channel 31. When mobile station 10 roams into a visited network 60, the user may still expect to receive the ESPN program content on home broadcast channel 31. The mapping processor 22 of the present invention meets this expectation by mapping home broadcast channel 31 to the visited broadcast channel that broadcasts the ESPN program content (visited broadcast channel 33). As a result, mapping processor 22 makes it appear to the user that the ESPN program content is still arriving at mobile station 10 via home broadcast channel 31, even though mobile station 10 is really receiving the ESPN program content on visited broadcast channel 33. In other words, the mapping process of the present invention is a background mapping process that is transparent to the user. According to one exemplary embodiment, mapping processor 22 maps the home broadcast channel to the visited broadcast channel by correlating a home channel indicator, i.e., channel 31 (ESPN program content), to the visited broadcast channel broadcasting the same ESPN program content.

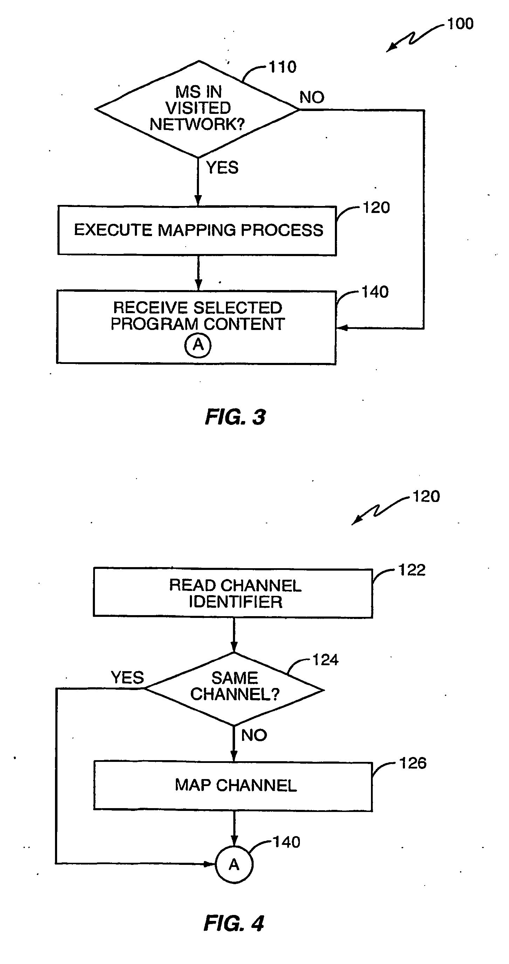

Figure 3 illustrates an exemplary process 100 implemented by mapping processor 22 according to one embodiment of the present invention. While mobile station 10 remains within home network 50 (step 110), the mobile station 10 receives program content from a user-selected home broadcast channel (step 140). However, when mobile station 10 enters a visited network 60 (step 110), mapping processor 22 executes the mapping process (step 120). The mapping process maps the home broadcast channel to a visited broadcast channel broadcasting the selected program content in the visited network 60 (step 120). Based on this mapping process, the system processor 20 programs transceiver 12 to receive the selected program content provided on the visited broadcast channel when the user selects the corresponding home broadcast channel (step 140).

As an example, consider the following. A mobile station 10 receiving program content on broadcast channel 31 (ESPN) in the home network 50 may roam into the Greensboro visited network 60 (step 110). In response, mapping processor 22 recognizes that in the visited network 60, ESPN is provided via physical channel 33. Therefore, mapping processor 22 maps channel 31 to channel 33, which is the assigned broadcast channel for ESPN program content in the Greensboro visited network 60 (step 120). As a result, the user will receive ESPN program content on channel 33 when mobile station 10 is in the Greensboro visited network 60 (step 140), even though the user has selected channel 31.

Figure 4 illustrates additional details for a mapping process (step 120) according to one exemplary embodiment of the present invention. According to this embodiment, when mobile station 10 enters a visited network 60, mapping processor 22 reads channel identifiers (step 122) broadcast by the visited network 60 and received by transceiver 12 to determine the channel assignments for the broadcast channels in the visited network 60. Visited network 60 may broadcast the channel identifiers on a control channel according to any known means. Alternatively, visited network 60 may broadcast the channel identifiers as part of the data stream containing the program content. In any event, mapping processor 22 may scan all or some broadcast channels in visited network 60 to assess available program content. Mapping processor 22 then uses the results of the scan to implement the mapping process.

When the received channel identifiers indicate that program content on the selected home broadcast channel is assigned to the same broadcast channel in the visited network 60 (step 124), mapping processor 22 bypasses the mapping function. However, when the channel identifiers indicate that the visited network 60 uses a different broadcast channel (step 124) to broadcast selected program content, mapping processor 22 identifies the broadcast channel broadcasting the selected program content in the visited network 60 based on the channel identifiers and maps the home broadcast channel to the identified visited broadcast channel (step 126). As long as the user remains in the visited network 60, mapping processor 22 repeats the mapping process (step 120) each time the user selects a new channel or each time mobile station 10 enters a new visited network 60. When mobile station 10 returns to the home network 50, mapping processor 22 deactivates the mapping implemented by mapping processor 22.

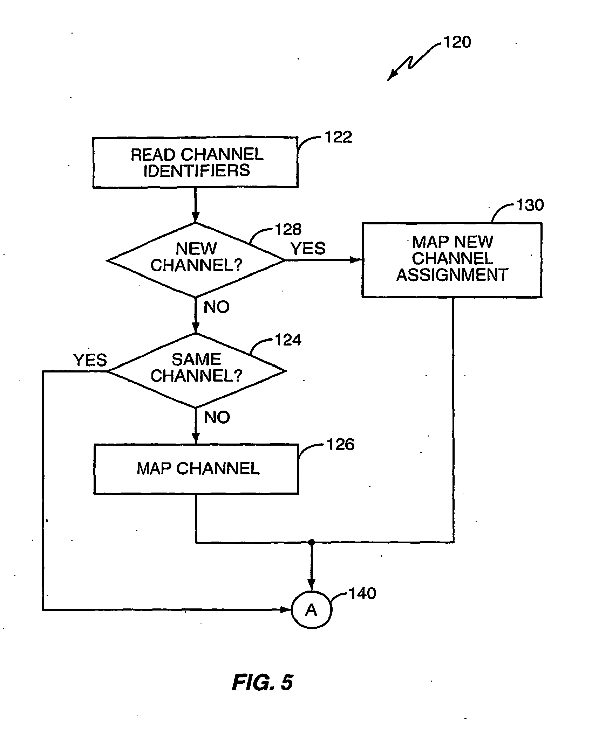

Figure 5 illustrates additional details of a mapping process (step 120) according to another exemplary embodiment of the present invention. While Figure 5 illustrates the mapping process steps in a particular order, those skilled in the art will appreciate that the mapping process is not limited to this particular step order. According to this embodiment, mapping processor 22 reads the channel identifiers broadcast by visited network 60 to determine the channel assignments for the broadcast channels in the visited network 60 (step 122). If the channel identifiers identify a broadcast channel that was not available in the home network (step 128), mapping processor 22 maps the new broadcast channel to a previously unassigned or otherwise unused channel indicator, and stores the broadcast information associated with the new broadcast channel in memory 16 (step 130).

If the channel identifiers identify a visited broadcast channel having a corresponding broadcast channel in the home network 50 (step 128), mapping processor 22 determines if the identified visited broadcast channel and the corresponding home broadcast channel are the same (step 124). If they are the same, mapping processor 22 bypasses the mapping function. However if they are different, mapping processor 22 maps the home broadcast channel to the corresponding visited broadcast channel identified by the channel identifiers (step 126). As long as the user remains in the visited network 60, mapping processor 22 repeats the mapping process (step 120) each time the user selects a new channel or each time mobile station 10 enters a new visited network 60. When mobile station 10 returns to the home network 50, mapping processor 22 deactivates the mapping implemented by mapping processor 22.

The above describes how mapping processor 22 maps a currently selected broadcast channel assigned to home network 50 to a visited broadcast channel broadcasting the same program content. Because the user may still select desired program content using channel indicators associated with the home broadcast channels, this mapping process is transparent to the user.

It will be appreciated that mapping processor 22 may only perform the mapping process as needed. In other words, mapping processor 22 may only map the currently selected broadcast channel. Each time the user selects a new broadcast channel, mapping processor 22 maps the newly selected broadcast channel to the corresponding broadcast channel in the visited network 60. Alternatively, mapping processor 22 may map multiple broadcast channels assigned to the home network 50 when mobile station 10 enters the visited network 60, and store the resulting mappings in memory 16. According to this embodiment, each time the user selects a new broadcast channel while in the visited network, mapping processor 22 retrieves the appropriate mapping from memory 16. In addition, mapping processor 22 may store mapping information associated with a particular visited network 60 in memory 16 for future use. As a result, when a mobile station 10 returns to a visited network 60, mapping processor 22 may retrieve the previously generated and stored mapping information from memory 16 for use during the mapping process.

The above described invention applies to any multi-media broadcast system that assigns network specific broadcast channels to common program content. For example, the present invention applies to DVB-H systems.

The present invention may, of course, be carried out in other ways than those specifically set forth herein. The present embodiments are to be considered in all respects as illustrative and not restrictive, and all changes coming within the meaning and equivalency range of the appended claims are intended to be embraced therein.

## Claims

1. A method of receiving selected program content at a mobile station (10) roaming outside of a home network (50), wherein the mobile station receives the selected program content on a first broadcast channel while the mobile station (10) is located in the home network (50), the method **characterized by**:
receiving channel identifiers via one or more broadcast channels broadcasting program content in a visited network (60);
when the mobile station (10) roams into the visited network (60), mapping the first broadcast channel to a second broadcast channel broadcasting the selected program content in the visited network (60) based on the received channel identifiers; and
receiving the selected program content at the mobile station (10) on the second broadcast channel while the mobile station (10) is located in the visited network (60).

2. The method of claim 1 wherein mapping the first broadcast channel to the second broadcast channel comprises correlating a first channel indicator assigned to the first broadcast channel to the second broadcast channel.

3. The method of claim 2 wherein the first channel indicator is assigned to the first broadcast channel by the home network (50).

4. The method of claim 2 wherein the first channel indicator comprises a user-selected channel indicator that correlates to a network-assigned channel indicator associated with the first broadcast channel.

5. The method of claim 1 further comprising assigning new program content to a new channel indicator when the mobile station (10) roams into the visited network (60), wherein the new program content is unavailable in the home network (50).

6. The method of claim 1 further comprising storing mapping information associated with mapping the first broadcast channel to the second broadcast channel for future use.

7. A mobile station (10) comprising:
a transceiver (12) configured to receive selected program content on a first broadcast channel while the mobile station (10) is located in a home network (50), said transceiver **characterized by** being configured to receive:
channel identifiers via one or more broadcast channels broadcasting program content in a visited network (60);
the selected program content on a second broadcast channel while the mobile station (10) is located in the visited network (60); and
a processor (22) configured to map the first broadcast channel to the second broadcast channel based on the received channel identifiers when the mobile station (10) roams into the visited network (60).

8. The mobile station (10) of claim 7, wherein the processor (22) is configured to map the first broadcast channel to the second broadcast channel by being configured to correlate a first channel indicator assigned to the first broadcast channel to the second broadcast channel.

9. The mobile station (10) of claim 8, wherein the first channel indicator is assigned to the first broadcast channel by the home network (50).

10. The mobile station (10) of claim 8, wherein the first channel indicator comprises a user-selected channel indicator that correlates to a network-assigned channel indicator associated with the first broadcast channel.

11. The mobile station (10) of claim 7, wherein the processor (22) is further configured to assign new program content to a new channel indicator when the mobile station (10) roams into the visited network (60), wherein the new program content is unavailable in the home network (50).

12. The mobile station (10) of claim 7, wherein the transceiver (12) comprises a digital video broadcast receiver.

13. The mobile station (10) of claim 7, further comprising a memory (16) configured to store mapping information associated with mapping the first broadcast channel to the second broadcast channel for future use.

## Patentansprüche

1. Verfahren des Empfangens ausgewählten Programminhalts an einer Mobilstation (10), die sich außerhalb eines Heimnetzes (50) bewegt, wobei die Mobilstation den ausgewählten Programminhalt auf einem ersten Broadcast-Kanal empfängt während die Mobilstation (10) in dem Heimnetz (50) lokalisiert ist, das Verfahren **gekennzeichnet durch**:
Empfangen von Kanal-Identifizierern über einen oder mehrere Broadcast-Kanäle, die Programminhalt in einem besuchten Netz (60) rundsenden;
wenn die Mobilstation (10) sich in das besuchte Netz (60) bewegt, Abbilden des ersten Broadcast-Kanals auf einen zweiten Broadcast-Kanal, der den gewählten Programminhalt in dem besuchten Netz (60) rundsendet, basierend auf den empfangenen Kanal-Identifizierern; und
Empfangen des gewählten Programminhalts an der Mobilstation (10) auf dem zweiten Broadcast-Kanal während die Mobilstation (10) in dem besuchten Netz (60) lokalisiert ist.

2. Verfahren nach Anspruch 1, wobei Abbilden des ersten Broadcast-Kanals auf den zweiten Broadcast-Kanal Korrelieren eines ersten Kanal-Identifikator, der dem ersten Broadcast-Kanal zugewiesen ist, zu dem zweiten Broadcast-Kanal umfasst.

3. Verfahren nach Anspruch 2, wobei der erste Kanal-Identifikator dem ersten Broadcast-Kanal durch das Heimnetz (50) zugewiesen ist.

4. Verfahren nach Anspruch 2, wobei der erste Kanalindikator einen Benutzer-gewählten Kanalindikator umfasst, der zu einem Netz-zugeordneten Kanalindikator korreliert, der mit dem ersten Broadcast-Kanal assoziiert ist.

5. Verfahren nach Anspruch 1, ferner umfassend Zuordnen neuen Programminhalts zu einem neuen Kanalindikator, wenn sich die Mobilstation (10) in ein besuchtes Netz (60) bewegt, wobei der neue Programminhalt in dem Heimnetz (50) nicht verfügbar ist.

6. Verfahren nach Anspruch 1, ferner umfassend Speichern von Abbildungsinformation, die assoziiert ist mit der Abbildung des ersten Broadcast-Kanals auf den zweiten Broadcast-Kanal, für eine zukünftige Verwendung.

7. Mobilstation (10), umfassend:
einen Sendeempfänger (12), der konfiguriert ist, um ausgewählten Programminhalt auf einem ersten Broadcast-Kanal zu empfangen während die Mobilstation (10) in einem Heimnetz (50) lokalisiert ist, wobei der Sendeempfänger **gekennzeichnet ist durch** das Konfiguriertsein zum Empfangen von:
Kanalidentifizierern über einen oder mehrere Broadcast-Kanäle, die Programminhalt in einem besuchten Netz (60) rundsenden;
den ausgewählten Programminhalt auf einem zweiten Broadcast-Kanal, während die Mobilstation (10) in einem besuchten Netz (60) lokalisiert ist; und
einen Prozessor (22), der konfiguriert ist, um den ersten Broadcast-Kanal auf den zweiten Broadcast-Kanal abzubilden, basierend auf den empfangenen Kanalidentifizierern, wenn sich die Mobilstation (10) in das besuchte Netz (60) bewegt.

8. Mobilstation (10) nach Anspruch 7, wobei der Prozessor (22) konfiguriert ist, um den ersten Broadcast-Kanal auf den zweiten Broadcast-Kanal abzubilden durch Konfiguriertsein, um einen ersten Kanalindikator, der dem ersten Broadcast-Kanal zugeordnet ist, zu einem zweiten Broadcast-Kanal zu korrelieren.

9. Mobilstation (10) nach Anspruch 8, wobei der erste Kanalindikator dem ersten Broadcast-Kanal durch das Heimnetz (50) zugewiesen wird.

10. Mobilstation (10) nach Anspruch 8, wobei der erste Kanalindikator einen Benutzer-gewählten Kanalindikator umfasst, der korreliert zu einem Netz-zugeordneten Kanalindikator, der mit dem ersten Broadcast-Kanal assoziiert ist.

11. Mobilstation (10) nach Anspruch 7, wobei der Prozessor (22) ferner konfiguriert ist, um neuen Programminhalt zu einem neuen Kanalindikator zuzuweisen, wenn sich die Mobilstation (10) in das besuchte Netz (60) bewegt, wobei der neue Programminhalt in dem Heimnetz (50) nicht verfügbar ist.

12. Mobilstation (10) nach Anspruch 7, wobei der Sendeempfänger (12) einen Digital-Video-Broadcast-Empfänger umfasst.

13. Mobilstation (10) nach Anspruch 7, ferner umfassend einen Speicher (16), der konfiguriert ist, um Abbildungsinformation, die mit der Abbildung des ersten Broadcast-Kanals zu dem zweiten Broadcast-Kanal assoziiert ist, für eine zukünftige Verwendung zu speichern.

## Revendications

1. Procédé pour recevoir un contenu de programme sélectionné au niveau d'une station mobile (10) en itinérance à l'extérieur d'un réseau domestique (50), où la station mobile reçoit le contenu de programme sélectionné sur un premier canal de diffusion tandis que la station mobile (10) est située dans le réseau domestique (50), le procédé étant **caractérisé par** le fait :
de recevoir des identificateurs de canaux à travers un ou plusieurs canaux de diffusion diffusant un contenu de programme dans un réseau visité (60) ;
de mettre en correspondance, lorsque la station mobile (10) est en itinérance dans le réseau visité (60), le premier canal de diffusion avec un deuxième canal de diffusion diffusant le contenu de programme sélectionné dans le réseau visité (60) sur la base des identificateurs de canaux reçus ; et
de recevoir le contenu de programme sélectionné au niveau de la station mobile (10) sur le deuxième canal de diffusion tandis que la station mobile (10) est située dans le réseau visité (60).

2. Procédé de la revendication 1, dans lequel la mise en correspondance du premier canal de diffusion avec le deuxième canal de diffusion comprend le fait de corréler un premier indicateur de canal attribué au premier canal de diffusion au deuxième canal de diffusion.

3. Procédé de la revendication 2, dans lequel le premier indicateur de canal est attribué au premier canal de diffusion par le réseau domestique (50).

4. Procédé de la revendication 2, dans lequel le premier indicateur de canal comprend un indicateur de canal sélectionné par un utilisateur qui est corrélé avec un indicateur de canal attribué par le réseau associé au premier canal de diffusion.

5. Procédé de la revendication 1 comprenant en plus l'attribution d'un nouveau contenu de programme à un nouvel indicateur de canal lorsque la station mobile (10) est en itinérance dans le réseau visité (60), où le nouveau contenu de programme n'est pas disponible dans le réseau domestique (50) .

6. Procédé de la revendication 1 comprenant en plus le stockage d'informations de mise en correspondance associées à la mise en correspondance du premier canal de diffusion avec le deuxième canal de diffusion pour une utilisation future.

7. Station mobile (10) comprenant :
un émetteur-récepteur (12) configuré pour recevoir un contenu de programme sélectionné sur un premier canal de diffusion tandis que la station mobile (10) est située dans un réseau domestique (50), ledit émetteur-récepteur **caractérisé par** le fait d'être configuré pour recevoir :
des identificateurs de canaux à travers un ou plusieurs canaux de diffusion diffusant un contenu de programme dans un réseau visité (60) ;
le contenu de programme sélectionné sur un deuxième canal de diffusion tandis que la station mobile (10) est située dans le réseau visité (60) ; et
un processeur (22) configuré pour mettre en correspondance le premier canal de diffusion avec le deuxième canal de diffusion sur la base des identificateurs de canaux reçus lorsque la station mobile (10) est en itinérance dans le réseau visité (60).

8. Station mobile (10) de la revendication 7, dans laquelle le processeur (22) est configuré pour mettre en correspondance le premier canal de diffusion avec le deuxième canal de diffusion en étant configuré pour corréler un premier indicateur de canal attribué au premier canal de diffusion au deuxième canal de diffusion.

9. Station mobile (10) de la revendication 8, dans laquelle le premier indicateur de canal est attribué au premier canal de diffusion par le réseau domestique (50).

10. Station mobile (10) de la revendication 8, dans laquelle le premier indicateur de canal comprend un indicateur de canal sélectionné par un utilisateur qui est corrélé avec un indicateur de canal attribué par le réseau associé au premier canal de diffusion.

11. Station mobile (10) de la revendication 7, dans laquelle le processeur (22) est en plus configuré pour attribuer un nouveau contenu de programme à un nouvel indicateur de canal lorsque la station mobile (10) est en itinérance dans le réseau visité (60), où le nouveau contenu de programme n'est pas disponible dans le réseau domestique (50).

12. Station mobile (10) de la revendication 7, dans laquelle l'émetteur-récepteur (12) comprend un récepteur de diffusion vidéo-numérique.

13. Station mobile (10) de la revendication 7, comprenant en plus une mémoire (16) configurée pour stocker des informations de mise en correspondance associées à la mise en correspondance du premier canal de diffusion avec le deuxième canal de diffusion pour une utilisation future.
